# EUROPÄISCHE PATENTSCHRIFT

(11) **EP 3 921 207 B1**
(45) Veröffentlichungstag und Bekanntmachung des Hinweises auf die Patenterteilung: **02.11.2022**
(21) Anmeldenummer: 19835255.1
(22) Anmeldetag: 12.12.2019
(51) Int. Cl.: B60R 13/02, B60R 7/10

(54) **TASCHENHAKEN FÜR DEN HECKBEREICH EINES KRAFTFAHRZEUGES**
BAG HOOK FOR THE REAR AREA OF A MOTOR VEHICLE
CROCHET POUR SAC POUR LA ZONE ARRIÈRE D'UN VÉHICULE AUTOMOBILE

(30) Priorität: 07.02.2019 DE 102019201579
(43) Veröffentlichungstag der Anmeldung: 15.12.2021
(73) Patentinhaber: PSA Automobiles SA, 78300 Poissy (FR)
(72) Erfinder: THUMS, Holger, 65428 Rüsselsheim am Main (DE)
(74) Vertreter: Spitzfaden, Ralf
(86) Internationale Anmeldenummer: PCT/EP2019/084812
(87) Internationale Veröffentlichungsnummer: WO 2020/160818

(56) Entgegenhaltungen:
- EP-A2- 2 062 783
- CN-U- 204 415 264
- JP-A- 2010 052 464
- JP-A- 2015 074 329

## Beschreibung

Die Offenbarung bezieht sich auf einen Taschenhaken im Bereich einer C-Säulenverkleidung eines Kraftfahrzeugs. Eine C-Säule ist eine Strebe zwischen einer Grundstruktur einer Karosserie eines Kraftfahrzeuges und einem Dach des Kraftfahrzeuges. Insbesondere ist die C-Säule eine von vorne gezählt dritte Säule. Sollten vier Säulen vorhanden sein ist die C-Säule die letzte Säule im Heckbereich des Kraftfahrzeugs. Heutzutage sind Karosseriestrukturen in nahezu jeder Preiskategorie im Fahrgastraum zur Kaschierung, Geräuschdämmung und Sicherheit mit passenden Verkleidungsteilen verkleidet. Allerdings werden für einige Verkleidungsteile in der Regel leichte Werkstoffe verwendet, die nahezu beliebige geometrische Strukturen annehmen können, die jedoch nicht immer mechanischen Belastungen standhalten. Bringt man einen Taschenhaken an einer solchen Verkleidung an, so verformt sich dieser unter Last, gegebenenfalls erst nach einem längeren Zeitraum und gegebenenfalls auch nur unter Temperatureinwirkung. Die Verformungen führen dazu, dass Spaltmaße zwischen benachbarten Verkleidungsteilen entstehen oder die Verkleidungsteile während der Fahrt geräuschvoll aneinander reiben.

Um dem entgegenzuwirken, wird in CN204415264 vorgeschlagen, einen Taschenhaken über ein stabiles Winkelstück an der Karosserie (Außen- oder Innenhaut) zu befestigen. Eine auf den Taschenhaken wirkende Last wird somit nicht in das Verkleidungsteil bzw. die C-Säulenverkleidung eingeleitet, sondern in die Karosserie. Das Verkleidungsteil bzw. die C-Säulenverkleidung verformen sich unter Last nicht.

JP 2015074329A, die dem Oberbegriff des Anspruchs 1 entspricht, offenbart einen Haken, der durch einen Gegenhaken einer Abdeckung verstärkt wird, so dass die Steifigkeit des Hakens erhöht wird, was zu mehr Komfort führt. Die Abdeckung kann aus einem Material mit hoher Biegeelastizität gebildet werden, so dass die Fahrzeuginnenkomponente mit hoher Hakensteifigkeit ohne Dickenzunahme eines Verkleidungsmaterials und Einfluss auf das Spritzgießen des Verkleidungsmaterials erhalten werden kann.

Diese Nachteile werden mit den Merkmalen des Anspruchs 1 abgestellt. Die Unteransprüche sind in technologisch sinnvoller Weise miteinander kombinierbar und sie zeigen jeweils weitere Ausgestaltungen auf. Vorgesehen ist demgemäß eine C-Säulenanordnung eines Kraftfahrzeuges, mit den Merkmalen des Anspruchs 1.

Die Befestigung der C-Säulenverkleidung mit der C-Säule kann über Clip- und Schraubverbindungen erfolgen. Die C-Säulenverkleidung kann einen im wesentlichen flächigen Abschnitt aufweisen, der sich zwischen der Konsole, einem hinteren Einstieg oder Heckfenster, einer Heckklappe und einem Dachhimmel erstreckt. Am hinteren Einstieg bzw. am Heckfenster ist die C-Säulenverkleidung in der Regel mit einer Dichtung eingeklemmt. Man kann sich zunutze machen, dass die C-Säulenverkleidung zumindest in der zur Erdbeschleunigung parallelen Fahrzeughochachse Z eine hohe Zugkraft aufnehmen kann. Allerdings soll der Taschenhaken unter einer Gepäckabdeckung im Kofferraum liegen. Die Gepäckabdeckung bildet einen Abschluss zwischen dem Ladegut im Kofferraum und dem Fahrzeuginnenraum, bei geöffneter Heckklappe öffnet sich die Heckabdeckung in der Regel mit (geführt über die Heckklappe). Dementsprechend soll ein Haken unterhalb der Heckabdeckung an der Konsole angeordnet werden. Von der Belastungsfähigkeit der C-Säule konnte dementsprechend nicht profitiert werden. Hiervon ausgehend wird vorgeschlagen, die C-Säule bis in den Überlappungsbereich nach unten entgegen der Z-Richtung fortzusetzen und hieran einen Taschenhaken auszubilden. Die Konsole liegt darüber und der Nutzer verwendet den Taschenhaken wie gewohnt. Allerdings kann der Taschenhaken eine ungleich viel höhere Last aufnehmen, ohne dass sich die Konsole verformt, da die Last in den nach unten fortgesetzten Überlappungsbereich an der C-Säulenverkleidung eingeleitet wird.

Eine Konsole ist ein Bauteil, das neben der reinen Verkleidung der Karosserie weitere Funktionen übernimmt. Beispielsweise ist in der Konsole häufig ein Lüftungsgitter integriert, welches Luft aus dem Innenraum aus ein einen Bereich zwischen der Konsole und der Fahrzeugkarosserie hindurchlässt. Die Konsole kann elektrische Anschlüsse und Signalanschlüsse für Antennenmodule, Lichtmodule und dergleichen beinhalten und in einigen Ausführungen als Träger für Sicherungen und elektrische Komponenten dienen. Die Konsole ist nicht einstückig mit der C-Säulenverkleidung verbunden, sondern darunter angeordnet. Zwischen der Konsole und der C-Säulenverkleidung ist ein Spalt, der möglichst klein zu halten ist. Indem eine am Taschenhaken angeordnete Last in die C-Säulenverkleidung eingeleitet wird, führt die Last nicht zu einer Verformung der Konsole oder zu einem Auseinanderziehen des Spaltes zwischen der C-Säulenverkleidung und der Konsole.

Konsolen der oben genannten Art werden häufig im Spritzgussverfahren hergestellt. Die Lasche ist im Prinzip ein Hinterschnitt, d.h. zwei transversal bewegte Werkzeugkavitäten können diesen nicht ohne zusätzliche Maßnahmen entformen. Als Maßnahme könnte ein Formkern eingelegt werden. Üblicher und kostengünstiger ist es, dass statt eines Hinterschnitts im Bereich der Lasche eine gegenüberliegende Öffnung vorgesehen ist, in die im Spritzgussverfahren ein Fortsatz eindringt und die Lasche von innen ausformt. Als zusätzlicher Vorteil der offenbarungsgemäßen C-Säulenanordnung kann diese Öffnung durch den Fortsatz an der C-Säulenverkleidung geschlossen werden.

An der Konsole ist im Überlappungsbereich eine Lasche angeordnet, welche sich einstückig aus der Konsole erstreckt und auf einer vom Fahrzeuginnenraum weg weisenden Seite eine Kavität aufweist, in welcher der Taschenhaken in einer Einbaulage angeordnet ist, so dass der Taschenhaken vom Fahrzeuginnenraum her nicht sichtbar ist.

Der die Last aufnehmende Taschenhaken ist durch die Lasche verdeckt und nicht sichtbar. An der Lasche können Taschen aufgehängt werden, deren Belastung in den Taschenhaken eingeleitet wird.

Dadurch dass der Taschenhaken die Kavität in einem unbelasteten Zustand, in welchem keine Belastung auf den Taschenhaken wirkt, nicht berührt, wird vermieden, dass die Konsole durch den Taschenhaken verformt bzw. zum Fahrzeuginnenraum hin gedrückt wird. Wenn eine Tasche an den Taschenhaken gehängt wird, verformt sich zwar bei entsprechender Belastung die Lasche sowie benachbarte Bereiche der Konsole, diese werden aber größtenteils von den Haltelaschen der Tasche verdeckt.

Entsprechend einer weiteren Ausgestaltung ist die Konsole aus Kunststoff gefertigt und weist zumindest im Überlappungsbereich eine Wandstärke von 1 mm bis 5 mm, insbesondere von 1,5 bis 2,5 mm auf.

Die Konsole ist demnach verhältnismäßig dünnwandig. Demensprechend gering ist die Belastbarkeit der Konsole. Die Konsole ist dazu ausgestaltet, Form- und Lagetoleranzen in gewissem Maße auszugleichen, weshalb die geringe Belastbarkeit gewollt ist. Die vorliegende Offenbarung zielt darauf ab, die Konsole von innen so auszusteifen, dass eine Tasche mit einem Gewicht von ca. 5 kg daran angehängt werden kann. Die Aussteifung erfolgt wie oben ausgeführt durch den Taschenhaken, der an der C-Säulenverkleidung angeordnet ist.

In einer weiteren Ausgestaltung weist die C-Säulenverkleidung im von der Konsole verdeckten Überlappungsbereich parallele, sich bis in eine Innenkontur der Konsole im Überlappungsbereich erstreckende Verstärkungsrippen auf.

Die C-Säulenverkleidung erstreckt sich im Überlappungsbereich zum Fahrzeuginnenraum hin. Die Erstreckung bewirkt eine Hebelwirkung. Bei Belastung wird die C-Säulenverkleidung demnach verformt. Die Verformung wird durch die Verstärkungsrippen reduziert.

In einer Ausgestaltung ist der Fortsatz an einem Verbindungsbereich, in welchem er sich aus der C-Säulenverkleidung erstreckt, als geschlossenes Hohlprofil ausgebildet, wobei zwischen dem geschlossenen Hohlprofil und dem Taschenhaken ein Freiraum zur Aufnahme einer Taschenlasche ausgebildet ist.

### Kurzbeschreibung der Figuren

Die hierin beschriebenen Zeichnungen dienen nur zu Veranschaulichungszwecken und sollen den Umfang der vorliegenden Offenbarung in keiner Weise einschränken. Es zeigen:
Fig. 1 eine C-Säule mit einer C-Säulenverkleidung und einer daran angrenzenden Konsole;
Fig. 2 eine teilweise geschnittene Darstellung des Taschenhakens bzw. der Konsole; und
Fig. 3 eine Darstellung eines Fortsatzes an der C-Säulenverkleidung, mit einem Hohlprofil und Verstärkungsrippen zur Erreichung einer hohen Steifigkeit des Taschenhakens sowie den Taschenhaken selbst.

Die folgende Beschreibung ist dem Wesen nach lediglich veranschaulichend. Der Klarheit halber sind in den Zeichnungen zur Bezeichnung ähnlicher Elemente dieselben Bezugszeichen verwendet.

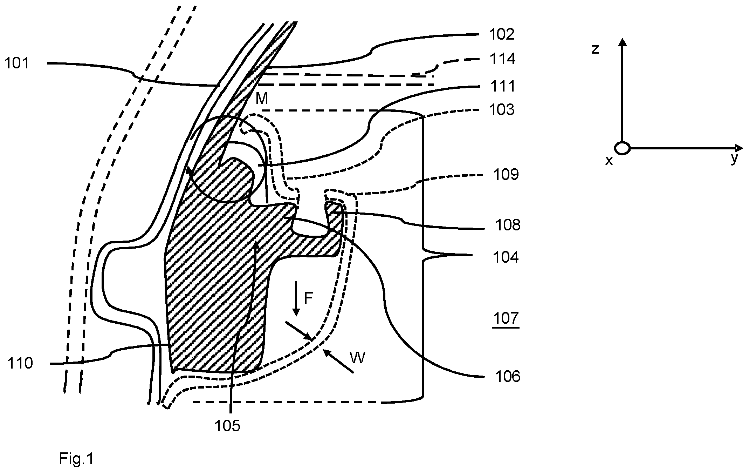

Figur 1 zeigt (vom Fahrzeuginnenraum betrachtet) eine C-Säule 101 eines ansonsten nicht dargestellten Kraftfahrzeuges. Als Referenzen für Richtungsangaben, sowie "vorne", "hinten", "oben", "unten", "rechts" und "links" ist ein Koordinatensystem angegeben, bei dem x in eine Fahrzeuglängsrichtung nach vorne, z in eine Fahrzeughochachse nach oben und y in eine Fahrzeugquerrichtung weisen.

An einer C-Säule 101 ist ein C-Säulenverkleidung 102 angebracht. Die C-Säule ist eine letzte Säule eines ansonsten nicht dargestellten Kraftfahrzeugs. Die C-Säule 101 verbindet eine Grundstruktur mit einer Dachstruktur, dementsprechend stabil ist sie ausgeführt und es kann eine hohe Belastung in die C-Säule eingeleitet werden. Die Anbringung der C-Säulenverkleidung 102 an der C-Säule 101 erfolgt durch geeignete, nicht dargestellte Befestigungsmittel wie Clipverbindungen, Klemmen, Schrauben und Kombinationen daraus. Die C-Säulenverkleidung 102 liegt flächig auf der C-Säule 101 und somit steht ausreichend Platz und Gelegenheit zur Verfügung, um eine sehr stabile Verbindung durch entsprechende Anordnung von Befestigungsmitteln zu schaffen. Die Befestigungsmittel können dabei durch die C-Säulenverkleidung 102 verborgen werden. Die C-Säulenverkleidung 102 kann dementsprechend einer hohen mechanischen Belastung standhalten.

Einer hohen Belastung hält eine an die C-Säulenverkleidung 102 angrenzende Konsole 103 hingegen nicht stand. Die Konsole 103 ist aus thermoplastischem Kunststoff geformt und besitzt eine Wandstärke w von 1 mm bis 5 mm, insbesondere von 1,5 bis 2,5 mm auf. In der Konsole 103 kann eine nicht dargestellte Leuchte angeordnet sein. Die Konsole 103 dient insbesondere dazu, in diesem Bereich vorhandene Elemente zu kaschieren. Zum Ausgleich von Form- und Lagetoleranzen muss die Konsole 103 eine gewisse Flexibilität aufweisen, so dass sie auch nicht beliebig verstärkt werden kann.

Die Konsole 103 ist über weniger belastbare, ebenfalls nicht dargestellte Befestigungsmittel an der C-Säule 101 angebracht. In einem Überlappungsbereich 104 überlappt die Konsole 103 die C-Säulenverkleidung 102 und verdeckt diese zumindest teilweise in diesem Bereich. Üblicherweise sind im betriebsbereiten Zustand des Kraftfahrzeuges bei geschlossener (nicht dargestellter) Heckklappe die C-Säulenverkleidung 102 und die Konsole 103 räumlich voneinander getrennt. Die Trennung erfolgt durch eine Gepäckabdeckung 114.

Aus der C-Säulenverkleidung 102 erstreckt sich einstückig in einem Verbindungsbereich 105 ein Fortsatz 106 zu einem Fahrzeuginnenraum 107 hin, entgegen der Fahrzeugquerrichtung y. An dem Fortsatz 106 ist ein Taschenhaken 108 einstückig angeformt. Der Taschenhaken 108 kann eine Belastung F in der Größenordnung von bis zu 30 kg tragen. Eine an der Konsole 103 angeformte Lasche 109 verdeckt den Taschenhaken 108. Ein Anwender erkennt den Taschenhaken 108 nicht. Die Lasche 109 kann wie gewohnt zum Anhängen von Taschen und der gleichen verwendet werden, die Belastung F wird jedoch nicht in die dünnwandige Konsole 103 eingeleitet, sondern in den darunter liegenden Taschenhaken 108 an der viel stabileren C-Säulenverkleidung 102.

Die C-Säulenverkleidung 102 wird hierdurch auf Zug belastet. Zudem wirkt der Fortsatz 106 eine Hebelwirkung, die ein resultierendes Moment M in die C-Säulenverkleidung 102 einleitet. Um dieses Moment M abzustützen, erstreckt sich die C-Säulenverkleidung bis zu einem Stützbereich 110. In dem Stützbereich 110 liegt die C-Säulenverkleidung 102 an einem stabilen Abschnitt einer Fahrzeugkarosserie an. Der Abschnitt der Fahrzeugkarosserie kann eine Innenhaut einer doppelwandigen Karosserie aus Metall sein und nahtlos in die C-Säule 101 übergehen oder mit dieser verschweißt sein.

Als weitere Maßnahme zur Stabilisierung der C-Säulenverkleidung 102 sind an ihr in dem Bereich, in dem das Moment M wirkt, Verstärkungsrippen 111 angeformt. Die Verstärkungsrippen 111 schmiegen sich im montierten Zustand von innen an eine Innenkontur der Konsole 103 an. Die Verstärkungsrippen 111 erstrecken sich in der Fahrzeughochachse z aus der C-Säulenverkleidung 102. Die Verstärkungsrippen 111 sind einstückig mit der C-Säulenverkleidung 102 verbunden. Bei der C-Säulenverkleidung 102 kann es sich um ein Spritzgussteil aus faserverstärkten Thermoplasten handeln.

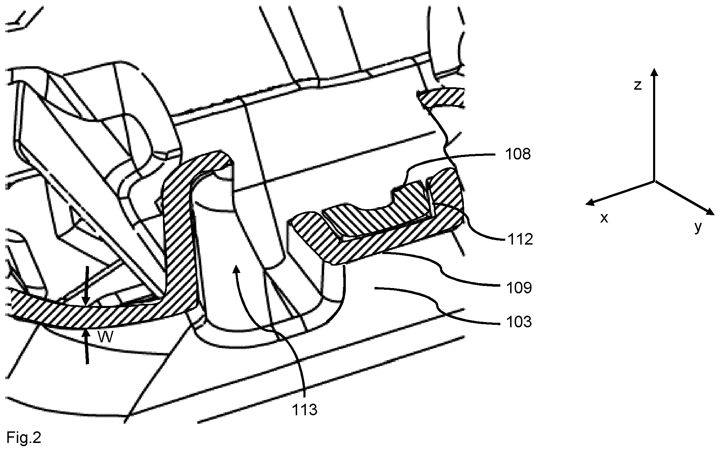

Figur 2 zeigt einen Schnitt durch den Taschenhaken 108 mit der ihn umgebenden Lasche 109. Man erkennt, dass in der Lasche 109 eine Kavität 112 zur Aufnahme des Taschenhakens 108 angeformt ist. Man erkennt weiterhin eine Rinne 113, in welche eine nicht dargestellte Taschenlasche einer Tasche eingelegt werden kann, um die Tasche aufzuhängen.

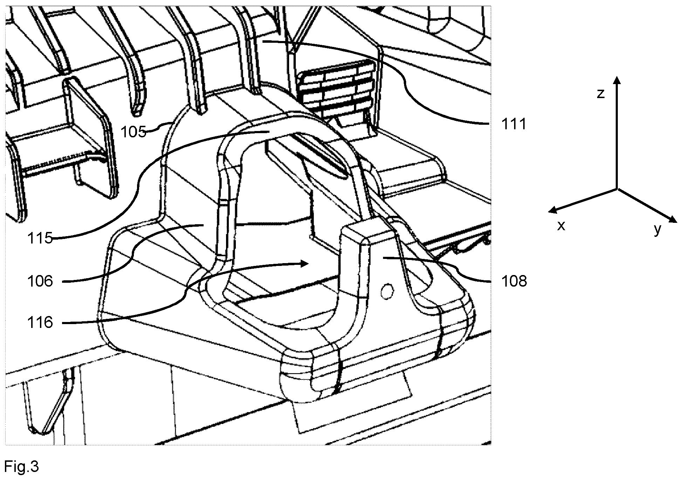

In Figur 3 ist ein Bereich der C-Säulenverkleidung 102 dargestellt, mit einem Taschenhaken 108, der sich am Ende eines Fortsatzes 106 aus der C-Säulenverkleidung 102 erstreckt. Man erkennt, dass der Fortsatz 106 in dem Verbindungsbereich 105 als Hohlprofil 115 ausgebildet ist. Das Hohlprofil 115 erhöht die Belastbarkeit des Taschenhakens 108. Ein Freiraum 116 erstreckt sich in dem Bereich, in dem bei montierter Konsole 103 die Lasche eingelegt wird, unterhalb der Rinne 113 (siehe Figur 2). Der Freiraum 116 ist dementsprechend geometrisch korrespondierend zu der Rinne 113 ausgeformt, um diese in sich aufzunehmen. Im montierten Zustand schmiegt sich die Rinne 116 formumgreifend an den Freiraum 116 an.

Gleichwohl zumindest ein Ausführungsbeispiel in der vorangegangenen Beschreibung sowie der Figurenbeschreibung dargestellt wurde, sollte man anerkennen, dass eine hohe Anzahl an Variationen existieren. Weiterhin sollte man anerkennen, dass das Ausführungsbeispiel bzw. die Ausführungsbeispiele nur Beispiele sind und dass sie nicht dazu dienen, den Schutzbereich, die Anwendbarkeit oder die genaue Ausgestaltung in irgendeiner Art und Weise zu beschränken. Vielmehr stellen die Beschreibung sowie die Figurenbeschreibung für den Fachmann eine nützliche Anleitung zur Implementierung mindestens einer Ausführungsform bereit, dabei sollte klar sein, dass verschiedene Änderungen in der Form und Funktion der beschriebenen Merkmale vorgenommen werden können, ohne den Schutzbereich der Ansprüche und deren Äquivalente zu verlassen. Die C-Säulenverkleidung kann beispielsweise auch an anderen Positionen im Kraftfahrzeug anspruchsgemäß verwendet werden.

### Bezugszeichenliste:

- 101: C-Säule
- 102: C-Säulenverkleidung
- 103: Konsole
- 104: Überlappungsbereich
- 105: Verbindungsbereich
- 106: Fortsatz
- 107: Fahrzeuginnenraum
- 108: Taschenhaken
- 109: Lasche
- 110: Stützbereich
- 111: Verstärkungsrippen
- 112: Kavität
- 113: Rinne
- 114: Gepäckabdeckung
- 115: Hohlprofil
- 116: Freiraum
- F: Belastung
- M: Moment
- w: Wandstärke
- x: Fahrzeuglängsrichtung
- y: Fahrzeugquerrichtung
- z: Fahrzeughochachse

## Patentansprüche

1. C-Säulenanordnung eines Kraftfahrzeuges,
- mit einer C-Säule (101) des Kraftfahrzeuges,
- mit einer C-Säulenverkleidung (102), welche an der C-Säule (101) des Kraftfahrzeuges befestigt ist und die C-Säule (101) flächig abdeckt,
- mit einer Konsole (103), welche in einen Überlappungsbereich (104) der C-Säulenverkleidung (102) überlappt,
- wobei sich im Überlappungsbereich (104) ein Taschenhaken (108) aus der C-Säulenverkleidung (102) erstreckt und einstückig mit dieser verbunden ist, so dass eine am Taschenhaken (108) eingeleitete Belastung (F) in die C-Säulenverkleidung (102) eingeleitet wird
- wobei an der Konsole (103) im Überlappungsbereich (104) eine Lasche (109) angeordnet ist, welche sich einstückig aus der Konsole (103) erstreckt und auf einer vom Fahrzeuginnenraum (107) weg weisenden Seite eine Kavität (112) aufweist, in welcher der Taschenhaken (108) in einer Einbaulage angeordnet ist, so dass der Taschenhaken (108) vom Fahrzeuginnenraum (107) her nicht sichtbar ist, **dadurch gekennzeichnet, dass** eine am Taschenhaken (108) eingeleitete Belastung (F) nicht in die Konsole (103) eingeleitet wird, und dass der Taschenhaken (108) die Kavität (112) in einem unbelasteten Zustand, in welchem keine Belastung (F) auf den Taschenhaken (108) wirkt, nicht berührt.

2. C-Säulenanordnung nach einem der vorhergehenden Ansprüche, wobei die Konsole (103) aus Kunststoff gefertigt ist und zumindest im Überlappungsbereich (104) eine Wandstärke (w) von 1 mm bis 5 mm, insbesondere von 1,5 bis 2,5 mm aufweist.

3. C-Säulenanordnung nach einem der vorhergehen Ansprüche, wobei die C-Säulenverkleidung (102) im von der Konsole (103) verdeckten Überlappungsbereich (104) parallele, sich bis zu einer Innenkontur der Konsole im Überlappungsbereich (104) erstreckende Verstärkungsrippen (111) aufweist.

4. C-Säulenanordnung nach einem der vorhergehenden Ansprüche, wobei der Taschenhaken (108) an einem sich in einer Fahrzeugquerrichtung (y) zum Fahrzeuginnenraum (107) erstreckendem Fortsatz (106) angeformt ist.

5. C-Säulenanordnung nach Anspruch 4, wobei der Fortsatz (106) an einem Verbindungsbereich (105), in welchem er sich aus der C-Säulenverkleidung (102) erstreckt, als geschlossenes Hohlprofil (115) ausgebildet ist, wobei zwischen dem geschlossenen Hohlprofil (115) und dem Taschenhaken (108) ein Freiraum (116) zur Aufnahme einer Taschenlasche ausgebildet ist.

## Claims

1. C-pillar arrangement of a motor vehicle,
- with a C-pillar (101) of the motor vehicle,
- with a C-pillar trim (102), which is attached to the C-pillar (101) of the motor vehicle and covers the entire surface of the C-pillar (101),
- with a console (103) which overlaps in an overlapping area (104) of the C-pillar trim (102),
- a bag hook (108) extending out of the C-pillar trim (102) in the overlapping area (104) and being connected in one piece to it, so that a load (F) introduced on the bag hook (108) into the C-pillar trim (102) is initiated
- wherein a tab (109) is arranged on the console (103) in the overlapping area (104), which extends in one piece from the console (103) and has a cavity (112) on a side facing away from the vehicle interior (107), in which the bag hook (108) is arranged in an installation position so that the bag hook (108) is not visible from the vehicle interior (107),
**characterized in that** a load (F) introduced at the bag hook (108) is not introduced into the console (103), and that the bag hook (108) does not touch the cavity (112) in an unloaded state in which no load (F) acts on the bag hook (108).

2. C-pillar arrangement according to one of the preceding claims, wherein the console (103) is made of plastic and at least in the overlapping area (104) has a wall thickness (w) of 1 mm to 5 mm, in particular 1.5 to 2.5 mm having.

3. C-pillar arrangement according to one of the preceding claims, wherein the C-pillar trim (102) in the overlapping area (104) covered by the console (103) has parallel reinforcing ribs (111) extending up to an inner contour of the console in the overlapping area (104). having.

4. C-pillar arrangement according to one of the preceding claims, wherein the bag hook (108) is formed on an extension (106) extending in a vehicle transverse direction (y) to the vehicle interior (107).

5. C-pillar arrangement according to claim 4, wherein the extension (106) at a connection area (105), in which it extends from the C-pillar panel (102), as a closed hollow profile (115) is formed, wherein between the closed hollow profile (115) and the bag hook (108) a free space (116) for receiving a bag strap is formed.

## Revendications

1. Disposition du montant C d'un véhicule à moteur,
- avec un montant C (101) du véhicule automobile,
- avec une garniture de montant C (102), qui est fixée au montant C (101) du véhicule automobile et couvre toute la surface du montant C (101),
- avec une console (103) qui chevauche dans une zone de chevauchement (104) de la garniture de montant C (102),
- un crochet de sac (108) s'étendant hors de la garniture de montant C (102) dans la zone de recouvrement (104) et étant relié d'une seule pièce à celle-ci, de sorte qu'une charge (F) introduite sur le crochet de sac (108) dans la garniture de montant C (102) est amorcée
- dans lequel une languette (109) est agencée sur la console (103) dans la zone de chevauchement (104), qui s'étend d'une seule pièce à partir de la console (103) et présente une cavité (112) sur un côté tourné à l'opposé de l'habitacle du véhicule (107), dans laquelle le crochet pour sac (108) est disposé dans une position de montage de sorte que le crochet pour sac (108) n'est pas visible depuis l'habitacle (107) du véhicule,
**caractérisé en ce qu'**une charge (F) introduite au niveau du crochet sac (108) n'est pas introduite dans la console (103), et que le crochet de sac (108) ne touche pas la cavité (112) dans un état non chargé dans lequel aucune charge (F) n'agit sur le crochet de sac (108).

2. Agencement de montant C selon l'une des revendications précédentes, dans lequel la console (103) est en matière plastique et présente au moins dans la zone de chevauchement (104) une épaisseur de paroi (w) de 1 mm à 5 mm, en particulier 1,5 à 2,5 mm ayant.

3. Agencement de montant C selon l'une des revendications précédentes, dans lequel la garniture de montant C (102) dans la zone de recouvrement (104) recouverte par la console (103) présente des nervures de renfort parallèles (111) s'étendant jusqu'à un contour intérieur de la console dans la zone de recouvrement (104).

4. Agencement de montant C selon l'une des revendications précédentes, dans lequel le crochet de sac (108) est formé sur une extension (106) s'étendant dans une direction transversale du véhicule (y) à l'intérieur du véhicule (107).

5. Agencement de montant C selon la revendication 4, dans lequel le prolongement (106) au niveau d'une zone de raccordement (105), dans laquelle il s'étend à partir du panneau de montant C (102), lorsqu'un profilé creux fermé (115) est formé, dans lequel entre le profil creux fermé (115) et le crochet de sac (108) un espace libre (116) pour recevoir une sangle de sac est formé.
